# FASCICULE DE BREVET EUROPEEN

(11) **EP 3 978 094 B1**
(45) Date de publication et mention de la délivrance du brevet: **03.05.2023**
(21) Numéro de dépôt: 21306319.1
(22) Date de dépôt: 24.09.2021
(51) Int. Cl.: B01D 11/04

(54) **EXTRACTEUR LIQUIDE-LIQUIDE ET BATTERIE COMPRENANT DE TELS EXTRACTEURS**
FLÜSSIG-FLÜSSIG-EXTRAKTOR UND BATTERIE, DIE SOLCHE EXTRAKTOREN UMFASST
LIQUID-LIQUID EXTRACTOR AND BATTERY COMPRISING SUCH EXTRACTORS

(30) Priorité: 02.10.2020 FR 2010084
(43) Date de publication de la demande: 06.04.2022
(73) Titulaire: Commissariat à l'énergie atomique et aux énergies alternatives, 75015 Paris (FR)
(72) Inventeur: ROUSSEL, Hervé, 30290 LAUDUN (FR); DUTILH, Frank, 30290 LAUDUN (FR)
(74) Mandataire: Brevalex

(56) Documents cités:
- EP-A1- 0 531 213
- CN-A- 108 751 135
- CN-A- 110 038 319
- FR-A- 1 580 163
- FR-A1- 2 459 064
- FR-A1- 2 831 075
- US-A- 3 162 510

## Description

L'invention se situe dans le domaine du génie chimique et se rapporte plus particulièrement à des extracteurs liquide-liquide, ainsi qu'à une batterie comprenant de tels extracteurs.

Ces extracteurs sont destinés à effectuer des transferts de solutés entre deux phases non miscibles, appelées couramment phases aqueuse et phase organique ou solvant, ou phase lourde et phase légère. Ils appartiennent à la famille des mélangeurs-décanteurs. Les deux phases liquides sont mélangées en créant une émulsion, puis séparées par décantation, ce qui permet au soluté contenu initialement dans un des liquides d'être transféré vers le second. Il arrive fréquemment qu'on emploie une batterie de plusieurs étages comprenant chacun un tel extracteur, afin d'obtenir une extraction meilleure dans un procédé où les phases passent successivement par chacun d'eux. Les extracteurs comprennent généralement un compartiment mélangeur dans lequel l'émulsion est formée par le mouvement d'un corps mobile, et un compartiment décanteur dans lequel les phases liquides sont séparées. La circulation des phases dans ces batteries est généralement à contre-courant.

Des extracteurs liquide-liquide de différentes tailles sont proposés, depuis de gros appareils industriels aptes à contenir plusieurs dizaines de mètres cubes par étage, jusqu'aux appareils de petits volumes, dont les extracteurs peuvent contenir chacun quelques centaines de millilitres par étage.

Des extracteurs à très petite capacité et très petit débit d'extraction ont été conçus pour des applications dans le domaine du combustible nucléaire. Les débits très réduits peuvent être de quelques dizaines à quelques centaines de millilitres à l'heure. Un exemple d'extracteur de ce genre est décrit dans le document FR 1580163 A. Une batterie d'extracteurs adaptée à de telles applications, et permettant d'être montée et modifiée facilement par télémanipulation, est décrite dans le document FR 2831075 A.

D'autres extracteurs sont notamment divulgués par les documents EP 0531213 A1 et FR 2459064 A1.

Un problème spécifique aux petits débits est que les forces de capillarité peuvent rendre irréguliers les écoulements des phases liquides, avec des variations, pouvant être inacceptables, des niveaux des phases ou de leur mélange dans les compartiments. Un autre problème fréquent rencontré est la difficulté à modifier une batterie d'extracteurs en milieu hostile, nucléaire par exemple, ou à démonter et régler les extracteurs individuels, qui sont précisément souvent de petite taille pour de petits débits, par des moyens de télémanipulation ou à travers une boîte à gant.

L'invention concerne d'abord un extracteur liquide-liquide amélioré, pouvant être de taille très réduite, et doté de divers perfectionnements assurant notamment une bonne régularité d'écoulement, même à très petit débit, une décantation facilitée et divers équipements faciles à installer sur la structure fixe de l'extracteur par télémanipulation si cela est nécessaire. Un autre aspect de l'invention est une batterie comprenant de tels extracteurs et conçue de manière à pouvoir être utilisée facilement en environnement nucléaire, c'est-à-dire en boîte à gant ou en chaîne blindée, grâce à une grande facilité de montage et d'assemblage par télémanipulation.

Sous une forme générale, l'invention est relative à un extracteur liquide-liquide comprenant un bloc creusé d'alvéoles de mélange et de décantation en communication, des conduits d'entrée de deux phases liquides menant à l'alvéole de mélange et des conduits de sortie des deux phases liquides raccordés à l'alvéole de décantation, caractérisé en ce que les conduits de sortie sont munis de surverses adjacentes à l'alvéole de décantation, et dotées chacune d'un bord de débordement des phases liquides ayant une hauteur irrégulière en forme de ligne brisée délimitant une pluralité de reliefs.

Les surverses ou déversoirs sont des obstacles à des écoulements des phases liquides, qui définissent des hauteurs au-dessus desquelles l'écoulement commence. Les surverses dont on discute ici sont placées aux sorties de l'alvéole de décantation, à des hauteurs différentes, de manière à régler la hauteur de chacune des phases à cet endroit. On appellera ici ligne brisée, une ligne délimitant typiquement une pluralité de reliefs alternativement saillants et rentrants en ayant une pente dont l'évolution est irrégulière, avec plusieurs inversions de sens, le long de la ligne. Dans le cas d'un très petit débit, l'écoulement subsiste à travers les fonds des reliefs rentrants, grâce à leur étroitesse, en évitant donc des effets importants des forces de capillarité et des rétentions de liquide en amont des surverses. Un tel effet n'existe pas sur une surverse rectiligne, ni une surface d'écoulement horizontale ou à faible pente, ni même au fond d'une rigole de section circulaire dont le rayon de courbure serait beaucoup plus grand que les reliefs envisagés ici.

Selon une forme préférée, le bord de débordement d'une au moins des surverses est formé d'une pluralité d'indentations s'étrécissant vers le bas jusqu'à une largeur nulle et formées par deux arêtes obliques.

Selon une autre forme, d'ailleurs compatible avec la précédente, le bord de débordement d'une au moins des surverses est dentelé, composé de reliefs alternés identiques et uniformément répartis.

Dans une forme particulière de réalisation de l'invention, une des surverses est placée à une jonction entre l'alvéole de décantation et le conduit de sortie d'une desdites phases liquides dite phase légère ; elle définit la hauteur totale des phases dans l'alvéole de décantation.

Selon encore une autre forme de réalisation, compatible avec la précédente, une autre des surverses peut être placée dans un puits d'entrée du conduit de sortie d'une autre des phases liquides dite phase lourde, à une hauteur réglable dans le puits d'entrée afin d'ajuster le temps de séjour relatif des deux phases liquides dans l'extracteur.

Selon une amélioration optionnelle mais importante, les conduits de sortie consistent principalement ou essentiellement en des canaux ouverts à une face supérieure du bloc composant la structure de l'extracteur. L'effet de cette construction des canaux de sortie à ciel ouvert est toutefois analogue à celui des reliefs des surverses : les effets de capillarité, les rétentions d'écoulements aux petits débits et aussi des piégeages de bulles d'air sont réduits, et une meilleure régularité de l'écoulement est donc encore obtenue. Ces canaux à ciel ouvert, qui sont le siège d'écoulements gravitaires des phases liquides, peuvent avantageusement s'étendre en ligne droite, par exemple parallèlement à des faces latérales du bloc où s'ouvrent les conduits de sortie ; ils peuvent être sans inconvénient assez longs et s'étendre par exemple sur au moins la moitié d'une longueur du bloc, mesurée parallèlement aux faces latérales. Les écoulements restent faciles et réguliers, et le bloc extracteur reste compact. Cette disposition est utile pour obtenir un extracteur où les débouchés d'entrée et de sortie de chacune des phases liquides sont alignés selon deux lignes perpendiculaires aux faces latérales. Son intérêt se manifeste dans des batteries comprenant plusieurs étages assemblés par les faces latérales : les extracteurs ont alors tous la même orientation, avec leurs équipements analogues alignés suivant des lignes parallèles, ce qui facilite les manipulations sur la batterie, améliore son aspect et permet des examens d'ensemble de la décantation, pour tous les étages de la batterie, en un coup d'oeil, si les alvéoles de décantation sont tous tournés vers un observateur et exposés au regard, par exemple à travers un hublot ou une autre paroi transparente.

Les canaux de sortie sont aussi avantageusement assez larges, avec éventuellement chacun une largeur égale à au moins un tiers d'une largeur, mesurée perpendiculairement aux faces latérales, de l'alvéole de décantation, encore afin de permettre une régularisation de l'écoulement gravitaire à ces endroits.

L'extracteur peut comprendre une troisième surverse, disposée entre l'alvéole de mélange et l'alvéole de décantation, et dotée, de manière analogue aux précédentes et avec le même effet, d'un bord de débordement des phases liquides ayant une hauteur irrégulière en forme de ligne brisée délimitant une pluralité de reliefs.

Selon d'autres perfectionnements optionnels envisageables :
- l'extracteur comprend une plaque de rabattement plongeant dans l'alvéole de décantation et continue jusqu'à une distance de garde avec un fond de l'alvéole de décantation ;
- il comprend un équipement de décantation, enfichable dans l'alvéole de décantation par translation et comprenant une grille de coalescence de l'émulsion formée précédemment, plongeant dans l'alvéole de décantation et favorisant la coalescence d'une des phases liquides ;
- cet équipement de décantation comprend une deuxième grille de coalescence favorisant la coalescence de l'autre des phases liquides ;
- le bloc comporte une console sur une face supérieure de laquelle une pompe de recirculation peut être posée, la pompe de recirculation étant dotée de tubes verticaux d'aspiration et de refoulement plongeant respectivement dans le conduit de sortie d'une des phases liquides et dans une chambre d'aspiration, creusée dans le bloc et communiquant à l'alvéole de mélange.

Un autre aspect de l'invention est une batterie d'extraction liquide-liquide comprenant au moins un extracteur conforme à ce qui précède ; l'extracteur ou les extracteurs et des modules d'extrémités sont alignés et serrés sur un rail, les modules d'extrémité comprenant des connexions à des circuits des phases liquides à contre-courant dans la batterie, les entrées et les sorties de chacune des phases étant en prolongement entre les extracteurs.

La batterie peut comprendre avantageusement des plaques intercalaires serrées contre les extracteurs et porteuses de joints d'étanchéité entourant les débouchés d'entrée et de sortie des phases liquides, de manière à faciliter encore le montage du dispositif.

Les extracteurs liquide-liquide, les modules d'extrémité, et éventuellement les plaques intercalaires, peuvent être imbriqués sur le rail en pouvant coulisser le long de lui, encore afin de faciliter le montage.

Un autre perfectionnement qu'on peut envisager est de pourvoir la batterie de moyens de chauffage. Ces moyens peuvent être établis à l'intérieur du rail ou sous lui, et consister en une nappe chauffante, par exemple par résistance électrique. Un autre dispositif peut comprendre un dispositif de circulation de fluide caloporteur traversant le bloc de chacun des extracteurs de la batterie.

Les différents aspects, caractéristiques et avantages de l'invention seront maintenant décrits plus en détail au moyen des figures suivantes, qui en illustrent certaines réalisations purement illustratives :
[Fig. 1] une vue de dessus d'un extracteur ;
[Fig. 2] une coupe longitudinale à travers le conduit de sortie de la phase lourde ;
[Fig. 3] une surverse réglable de phase lourde ;
[Fig. 4] une chambre de mélange des phases ;
[Fig. 5] les équipements de mise en émulsion du mélange ;
[Fig. 6] l'équipement facilitant la décantation ;
[Fig. 7] un équipement de recirculation ;
[Fig. 8] la surverse de phase légère ;
[Fig. 9] une batterie à plusieurs étages d'extracteurs ;
[Fig. 10] un rail de montage et de support de la batterie ;
[Fig. 11] une plaque d'étanchéité entre extracteurs ;
[Fig. 12] une réalisation d'extracteur à fluide caloporteur ;

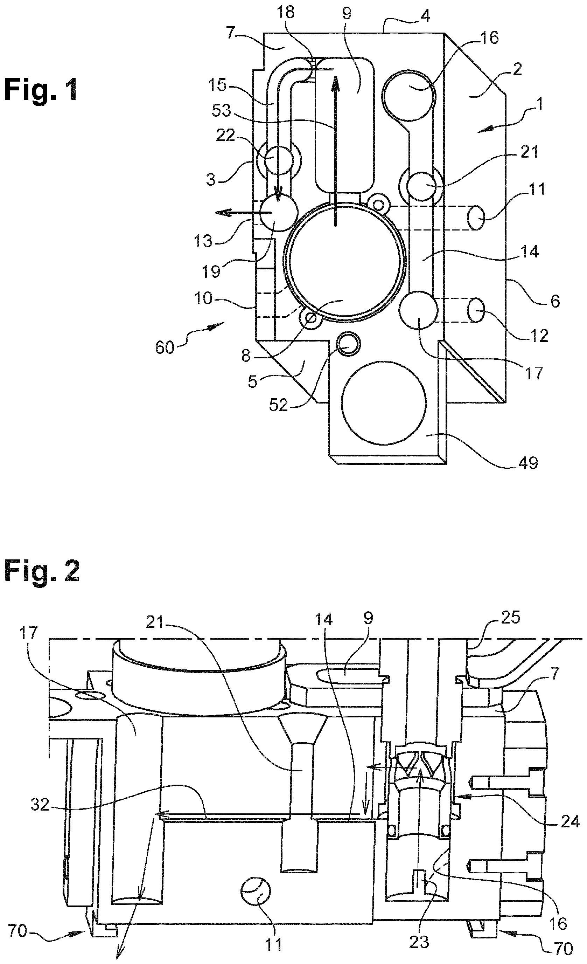

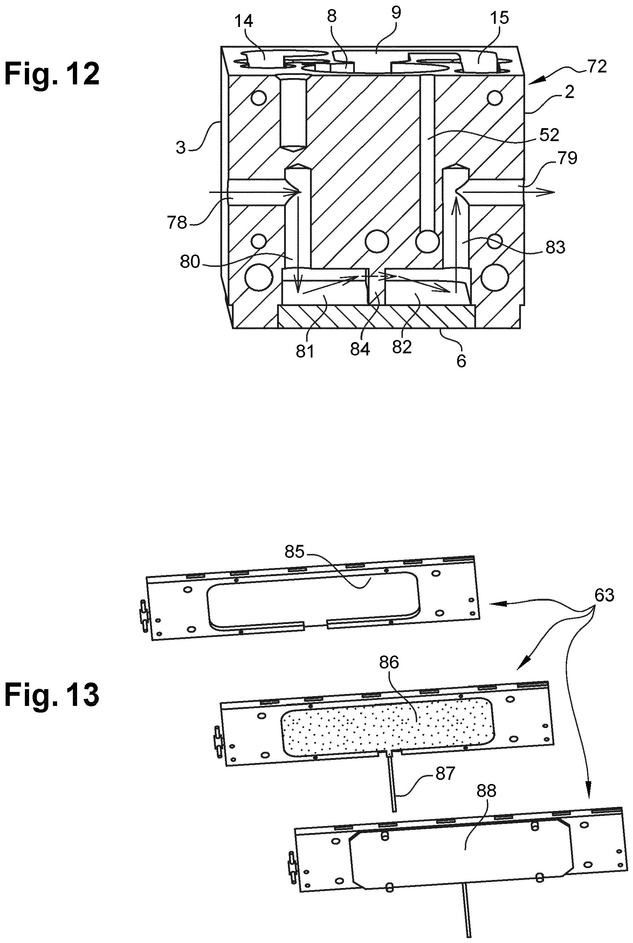

[Fig. 13] une réalisation de rail de support de la batterie à moyen de chauffage intégré. On décrira d'abord un extracteur 60 liquide-liquide individuel, illustré à partir de la figure 1. Il consiste en un bloc 1 de forme générale parallélépipédique presque régulière et limitée par deux faces verticales longues qui sont une première face latérale 2 et une seconde face latérale 3 parallèle à la précédente, par deux faces verticales courtes, dont une face avant 4 et une face arrière 5 perpendiculaires aux précédentes, et par une face de fond 6 et une face supérieure 7 perpendiculaires à toutes les précédentes. Le bloc 1 est creusé d'alvéoles dont un alvéole de mélange 8, un alvéole de décantation 9, et aussi d'un conduit d'entrée de phase lourde 10, d'un conduit d'entrée de phase légère 11, d'un conduit de sortie de phase lourde 12 et d'un conduit de sortie de phase légère 13. Les conduits d'entrée 10 et 11 de la phase lourde et de la phase légère aboutissent à l'alvéole de mélange 8, à partir respectivement de la seconde face latérale 3 et de la première face latérale 2, et les conduits de sortie 12 et 13 de la phase lourde et de la phase légère partent de l'alvéole de décantation 9 et aboutissent respectivement à la première face latérale 2 et à la seconde face latérale 3. Les débouchés des conduits d'entrée et de sortie de la phase lourde 10 et 12 sur les faces latérales 2 et 3 sont en alignement dans la direction perpendiculaire à ces faces latérales 2 et 3, et les débouchés des conduits d'entrée et de sortie 11 et 13 de la phase légère sont de même en alignement dans cette direction.

Il est donc possible obtenir des batteries composées de plusieurs étages accouplés successivement, comprenant chacun un de ces extracteurs 60, dans lesquelles il se forme des conduits unitaires de phase lourde et de phase légère passant successivement par tous les alvéoles de mélanges 8 et de décantation 9 et empruntant des trajets à contre-courant à travers les extracteurs 60. Une telle batterie sera décrite plus loin. Le passage par plusieurs extracteurs 60 est appliqué pour produire une extraction plus poussée du soluté.

Les conduits de sortie 12 et 13 de la phase lourde et de la phase légère comprennent principalement des portions parallèles aux faces latérales 2 et 3, appelées respectivement canal de sortie de phase lourde 14 et canal de sortie de phase légère 15 ; le canal de sortie de phase lourde 14 est adjacent à la première face latérale 2 et s'étend d'un puits d'entrée 16 à un puits de sortie 17, dont le premier est adjacent à l'alvéole de décantation 9 et à la face avant 4, sur un peu plus de la moitié de la longueur de l'extracteur entre la face avant 4 et la face arrière 5. Le canal de sortie de phase légère 15 communique à l'alvéole de décantation 9 par une surverse de phase légère 18 et s'étend jusqu'à un puits de sortie 19 en étant adjacent à la seconde face latérale 3 sur environ la moitié de ladite longueur de l'extracteur 60. L'alvéole de mélange 8, l'alvéole de décantation 9 et la plus grande partie des conduits de sortie 12 et 13, dont notamment les canaux de sortie 14 et 15, s'ouvrent hors de l'extracteur 60 en débouchant à sa face supérieure 7. Cette disposition permet de réduire l'influence des phénomènes de capillarité et le piégeage de bulles d'air pouvant bloquer l'écoulement de sortie, même à débit très petit.

La face avant 4 est partiellement transparente et munie d'un hublot 20 (illustré aux figures 2, 6 et 9) qui permet d'observer, pour chaque extracteur 60 d'une batterie, le déroulement de la décantation et de l'évacuation des phases : le hublot 20 délimite en effet partiellement l'alvéole de décantation 9 et l'entrée du conduit de sortie de phase légère 13. En variante, le bloc 1 tout entier pourrait être transparent.

Les canaux de sortie de phase lourde et de phase légère 14 et 15 sont dotés de puits intermédiaires 21 et 22 pouvant recevoir des sondes spectrophotométriques pour l'analyse en ligne de la composition des phases. Le mouvement d'écoulement de la phase légère est représenté par les flèches 53.

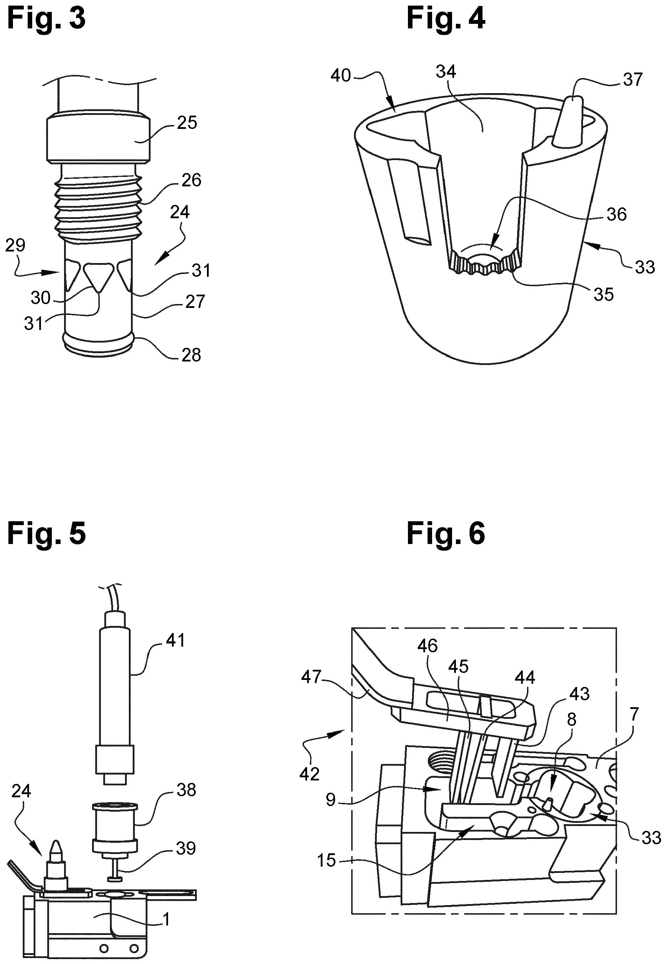

Les figures 2 et 3 illustrent davantage le conduit de sortie de phase lourde 12. Le puits d'entrée 16 comporte une ouverture inférieure 23 qui communique au fond de l'alvéole de décantation 9 : la phase lourde s'accumule dans le puits d'entrée 16 pendant le procédé et finit par atteindre une surverse de phase lourde 24 qui est une pièce séparée, représentée en détail à la figure 3. La surverse de phase lourde 24 est de forme générale cylindrique et comprend de haut en bas une poignée 25 de préhension, un filetage 26 et une douille 27. La poignée 25 est en saillie sur l'extracteur au-dessus de la face supérieure 7, le filetage 26 est engagé dans un taraudage correspondant au sommet du puits d'entrée 16, et la douille 27 s'étend dans ce dernier avec du jeu, à l'exception de sa partie inférieure, qui est munie d'un joint d'étanchéité torique 28 frottant contre le puits d'entrée 16 au-dessus de l'ouverture inférieure 23 et au-dessous d'un raccordement au canal de sortie de phase lourde 14.

Une portion supérieure de la douille 27, au-dessus du joint d'étanchéité 28, est munie de découpes triangulaires 29 réparties sur sa périphérie et délimitées par un bord inférieur 30 en dents de scie, de manière que les découpes triangulaires 29 aient chacune une pointe inférieure 31 formant un angle aigu. Les pointes inférieures 31 s'étendent devant le raccordement au canal de sortie de phase lourde 14, et la phase lourde se déverse dans ce canal, une fois qu'elle a atteint le niveau des découpes triangulaires 29. Elle peut ensuite s'écouler dans le canal de sortie de phase lourde 14, avant de rejoindre le puits de sortie 17 et de quitter l'extracteur 60. Le mouvement d'écoulement de la phase lourde est représenté par les flèches 32.

La construction de l'extracteur 60 à partir d'un bloc 1 unitaire et évidé permet d'y adjoindre divers équipements en les montant par la face supérieure 7, par vissage comme avec la surverse de phase lourde 24, ou par simple enfichage par translation verticale, comme les équipements qu'on va maintenant décrire. Les réglages et les manipulations sur les extracteurs 60, ainsi que leurs assemblages en batteries, sont considérablement facilitées et peuvent être accomplis par des appareils de télémanipulation ou à travers des boîtes à gants.

La figure 4 représente une chambre de mélange 33 qui est enfoncée dans l'alvéole de mélange 8 avec un jeu étroit. Elle est une pièce creuse, approximativement cylindrique, ouverte vers le haut et munie à un côté d'une encoche supérieure 34 dont le bord inférieur est une surverse de mélange 35, d'une ouverture inférieure 36 au fond, et d'un pion vertical 37 se dressant verticalement à sa face supérieure. Quand la chambre de mélange 33 est montée, l'encoche supérieure 34 et la surverse de mélange 35 s'étendent devant la partie supérieure de l'alvéole de décantation 9 et définissent le niveau au-dessus duquel le mélange présent dans la chambre 33 peut s'écouler dans l'alvéole de décantation 9. La surverse de mélange 35 a une forme dentelée ou crénelée, son bord supérieur par lequel le mélange s'écoule vers l'alvéole de décantation étant en forme de ligne brisée formant alternativement de petits reliefs saillants et rentrants. La hauteur de ce bord supérieur est donc variable. De plus, les reliefs rentrants s'étrécissent avantageusement vers le bas, ce qui est vérifié si les reliefs sont séparés par des faces obliques. A l'extrême, on peut envisager que les faces obliques se rejoignent en angle vif, pour donner au fond des reliefs rentrants une largeur nulle. Ces dispositions ont pour effet une régularisation de l'écoulement même aux très petits débits malgré les forces de capillarité qui pourraient produire des rétentions de liquide s'accumulant temporairement en gouttelettes ou en surplombant légèrement la surverse, et des à-coup de l'écoulement ; la construction proposée ici de la surverse de mélange délimitée par une ligne brisée composant une pluralité de reliefs fait qu'une largeur d'écoulement faible ou minime est offerte au liquide à petit débit s'il affleure à peine au-dessus de la surverse, ce qui réduit l'effet des forces de capillarité et tend à maintenir un écoulement permanent.

Une disposition analogue à bord de débordement en ligne brisée, avec le même but, caractérisait la surverse de phase lourde 24, et caractérise aussi la surverse de phase légère 18 qui sera complètement décrite plus loin. Et la construction à ciel ouvert des canaux de sortie 14 et 15, a aussi le même but de réduction d'effet de forces de capillarité et de régularisation des écoulements.

La figure 5 illustre un bloc à roulements 38 porteur d'un mobile d'agitation 39 à pales verticales, qui peut être posé sur le bord supérieur 40 de la chambre de mélange 33 à une position angulaire fixe, grâce au pion vertical 37 ; et un moteur 41 qui peut être posé sur le bord supérieur du bloc à roulements 38, de manière à faire tourner le mobile d'agitation 39, quand il est mis en marche, le mobile d'agitation 39 pénétrant dans la chambre de mélange 33 à ce moment pour mélanger les phases liquides et créer une émulsion.

Deux autres équipements peuvent encore être installés dans l'extracteur par enfichage à partir de la face supérieure 7. Le premier est engagé dans l'alvéole de décantation 9, porte la référence générale 42 (figure 6) et peut comprendre une plaque de rabattement 43, ainsi que deux grilles de coalescence 44 et 45, toutes reliées à une plaque supérieure 46. A l'état monté, la plaque de rabattement 43 est verticale et adjacente à l'alvéole de mélange 8 ; sa fonction est d'obliger le mélange à entrer dans l'alvéole de décantation 9 par le milieu. Les grilles de coalescence 44 et 45 sont, comme leur nom l'indique, destinées à favoriser la coalescence de celle des phases qui est en émulsion dans l'autre, en donnant donc une phase lourde et une phase légère nettement séparées et superposées dans l'alvéole de décantation 9. Une des grilles de coalescence 44 peut être hydrophobe et l'autre hydrophile, de façon à favoriser aussi bien la coalescence de la phase organique (en général la phase légère) que celle de la phase aqueuse (en général la phase lourde) selon la catégorie de l'émulsion. En variante, on pourrait employer deux grilles de coalescence semblables, pour des phases en émulsions difficiles à reconstituer. Les grilles de coalescence 44 et 45 sont elles aussi verticales, parallèles à la plaque de rabattement 43 et s'étendent vers le milieu de l'alvéole de décantation 9 dans un ordre quelconque. Une tirette 47 s'élevant vers le haut et fixée à la plaque supérieure 46 est ajoutée pour permettre la manipulation de l'équipement.

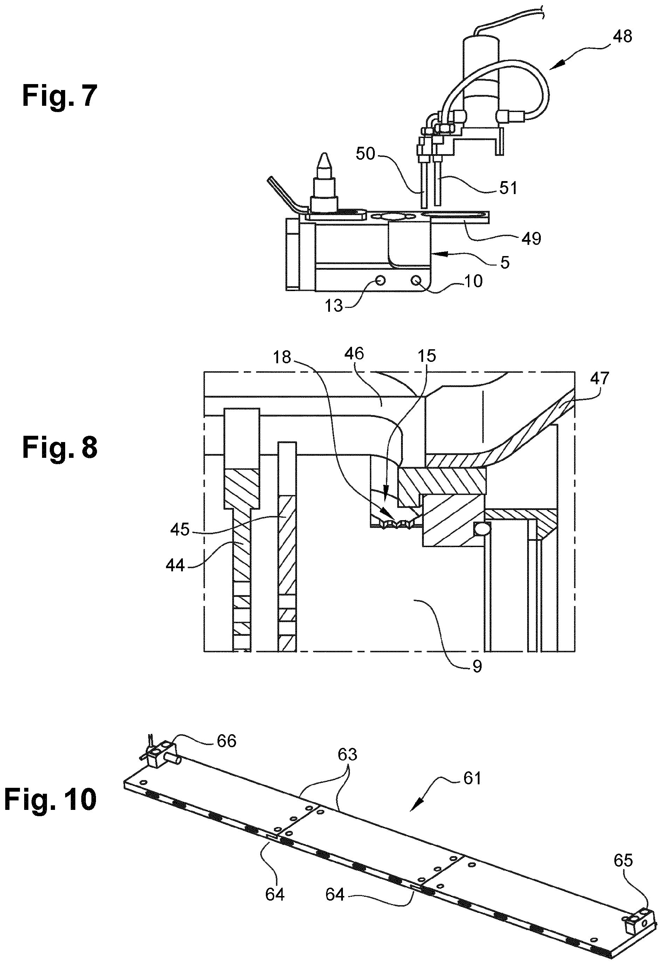

Un autre équipement amovible est représenté à la figure 7 et consiste en une pompe de recyclage 48 utile dans certains procédés et qui sert à produire un retour partiel d'une des phases, ici la phase lourde, vers l'alvéole de mélange 8. La pompe de recyclage 48 est posée sur une console 49 horizontale fixée à la face arrière 5 du bloc 1 et en dépassant vers l'arrière (par souci de clarté, on a toutefois ici représenté la pompe de recyclage 48 soulevée au-dessus de la console 49). Elle est munie d'un tube d'aspiration 50 et d'un tube de refoulement 51 verticaux, aptes à pénétrer respectivement dans le puits de sortie 17 de la phase lourde pour en aspirer un débit et dans un puits de recyclage 52 vertical creusé dans le bloc 1 à proximité de l'alvéole de mélange 8. Le puits de recyclage 52, de même que les conduits d'entrée 10 et 11 de la phase lourde et de la phase légère, débouchent dans l'alvéole de mélange 8 et les liquides qui les empruntent entrent ensuite dans la chambre de mélange 34 par l'ouverture inférieure 36.

La figure 8 montre que le canal de sortie de la phase légère 15 est en dénivellation par rapport à la surverse de phase légère 18. La surverse de phase légère est ici encore matérialisée par un bord de débordement franchi par l'écoulement du liquide et formé par une ligne brisée, formant ici des parties horizontales de fond et des parties obliques, et ainsi des reliefs saillants à sommet plat alternant avec des indentations triangulaires se resserrant vers le bas.

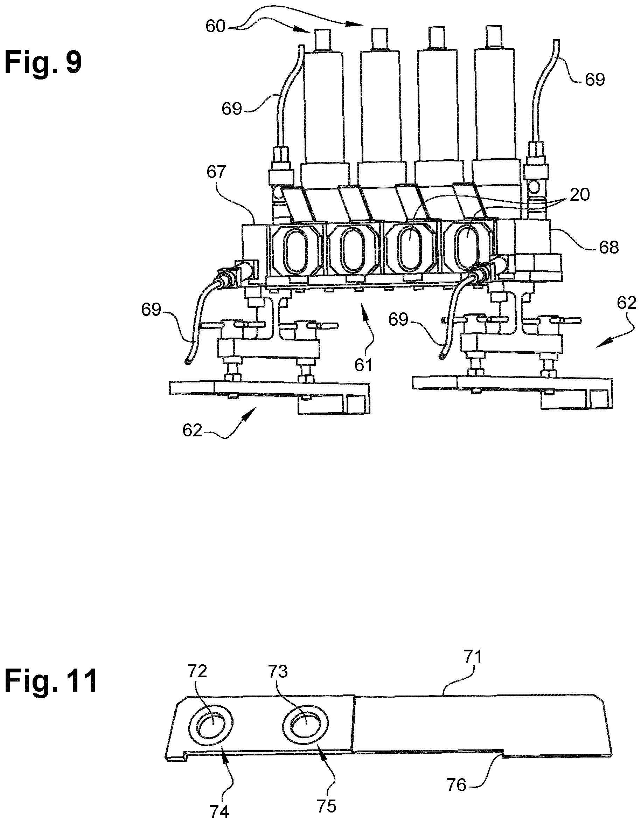

Un autre aspect de l'invention sera maintenant décrit en recourant aux dernières figures 9 à 13 de cette description : l'assemblage des extracteurs 60 décrits jusqu'ici pour former une batterie d'extraction.

Une telle batterie est représentée à la figure 9. Les extracteurs 60 sont disposés côte à côte sur un rail de support 61 plat dont les extrémités sont posées sur des supports 62. On notera que les hublots 20 sont alignés sur une même face de la batterie, afin de procurer des examens d'ensemble rapides des procédés accomplis dans la batterie. Cette disposition est redevable notamment à l'agencement des alvéoles de mélange 8 alignés entre eux et des alvéoles de décantation 9 alignés entre eux parallèlement au rail de support, et aux canaux de phase lourde 14 et de phase légère 15 assez longs et parallèles aux faces latérales 2 et 3 par lesquelles les extracteurs 60 sont assemblés, de façon que les conduits d'entrée et de sortie de chacune des phases sortent du bloc 1 à des positions alignées dans la direction perpendiculaire aux faces latérales 2 et 3 et parallèle au rail de support 61 ; alors qu'un agencement classique des extracteurs d'une batterie est tête-bêche, avec des alvéoles de mélange et de décantation alternant le long de deux lignes parallèles, ce qui permet des conduits de sortie des phases liquides plus courts et quasiment perpendiculaires aux faces latérales (comme le sont encore ici les conduits d'entrée 10 et 11), mais avec donc l'inconvénient que l'examen d'ensemble de la décantation des étages n'est plus possible.

La figure 10 montre que le rail de support 61 peut consister en un nombre quelconque de plaques 63 individuelles assemblées les unes aux autres par des vissages et des emboîtements de forme à leur jonction 64. Les extrémités du rail de support portent des butées 65 et 66 opposées, dont l'une au moins (66) peut comprendre un cabestan de serrage de la batterie, évitant les disjonctions de ses éléments et assurant l'étanchéité des canaux 10 à 13. Outre les extracteurs 60, la batterie comprend, à ses extrémités et donc au contact des butées 65 et 66, deux modules d'extrémité 67 et 68 également parallélépipédiques et comprenant des raccords, globalement référencés par 69, d'entrée et de sortie des phases menant au reste de leurs circuits de circulation. Les modules d'extrémité 67 et 68 communiquent aux conduits d'entrée et de sortie de l'extracteur 60 adjacent. La cohésion de la batterie est encore assurée par des portions de glissières et d'ergots 70 (représentées à la figure 2) permettant de faire coulisser les extracteurs 60 sur le rail de support 61, mais sans pouvoir les soulever. Un système semblable est prévu sur les modules d'extrémités 67 et 68. Et la batterie est complétée par (figure 11) des plaques intercalaires 71 entre les extracteurs 60, qui sont munies de deux perçages 72 et 73 porteurs de joints d'étanchéité 74 et 75. Les plaques intercalaires 71 sont munies d'une rainure inférieure 76 qui s'ajuste sur le rail de support 61 et permet de les maintenir en position sur lui. Quand le serrage est effectué, les conduits d'entrée et de sortie 10 à 13 des extracteurs 60 viennent en prolongement les uns des autres, avec les perçages 72 et 73 entre eux et les joints 74 et 75 autour d'eux, ce qui garantit l'étanchéité des circuits liquides.

On s'intéressera enfin à la possibilité d'une régulation de température des phases liquides. Elle peut être accomplie par la circulation d'un fluide caloporteur à travers les extracteurs 60. Une réalisation, représentée à la figure 12, peut comprendre, dans un bloc 77 un peu plus volumineux que le bloc 1 décrit jusqu'à présent, des conduits caloporteurs comprenant un conduit d'entrée 78 de fluide caloporteur situé près de la face arrière 5, un conduit de sortie 79 du fluide caloporteur également situé près de la face arrière 5, et, reliant les conduits d'entrée et de sortie 78 et 79, un conduit intérieur comprenant successivement une première portion descendante 80, une portion longitudinale 81 proche de la face inférieure 6 et dirigée vers la face avant 4, une seconde portion longitudinale 82 qui ramène le fluide vers la face arrière 5, parallèlement et en sens opposé à la première portion longitudinale 81, et une portion ascendante 83. Les portions longitudinales 81 et 82 sont séparées par une cloison 84. Elles font passer le fluide caloporteur au-dessous des alvéoles de mélange 8 et de décantation 9.

Une autre possibilité est évoquée à propos de la figure 13. La régulation de température peut s'effectuer par chaque plaque 63 du rail de support 61, qui est munie d'un creux 85, s'ouvrant par exemple à sa face inférieure, et qu'on fait occuper par une nappe chauffante électrique 86 plate, alimentée par des raccords vers l'extérieur 87. Un couvercle 88 est vissé pour fermer le creux 85 et y maintenir la nappe chauffante 86.

## Revendications

1. Extracteur (60) liquide-liquide comprenant un bloc (1) creusé d'alvéoles de mélange (8) et de décantation (9) en communication, des conduits d'entrée (10, 11) de deux phases liquides menant à l'alvéole de mélange et des conduits de sortie (12, 13) des deux phases liquides menant à l'alvéole de décantation, **caractérisé en ce que** les conduits de sortie sont munis de surverses (18, 24) adjacentes à l'alvéole de décantation (9), et dotées chacune d'un bord de débordement des phases liquides ayant une hauteur irrégulière en forme de ligne brisée délimitant une pluralité de reliefs.

2. Extracteur liquide-liquide selon la revendication 1, **caractérisé en ce que** le bord de débordement (30) d'une au moins des surverses (24) est formé d'une pluralité d'indentations s'étrécissant vers le bas jusqu'à une largeur nulle et formées par deux arêtes obliques.

3. Extracteur liquide-liquide selon la revendication 1, **caractérisé en ce que** le bord de débordement d'une au moins des surverses est dentelé, composé de reliefs identiques et uniformément répartis.

4. Extracteur liquide-liquide selon l'une quelconque des revendications 1 à 3, **caractérisé en ce qu'**une des surverses (18) est placée à une jonction entre l'alvéole de décantation et le conduit de sortie d'une desdites phases liquides dite phase légère.

5. Extracteur liquide-liquide selon l'une quelconque des revendications 1 à 4, **caractérisé en ce qu'**une autre des surverses (24) est placée dans un puits d'entrée (16) du conduit de sortie (14) d'une autre des phases liquides dite phase lourde, à une hauteur réglable dans le puits d'entrée.

6. Extracteur liquide-liquide selon l'une quelconque des revendications 1 à 5, **caractérisé en ce que** les conduits de sortie consistent essentiellement en des canaux (14, 15) ouverts à une face supérieure (1) du bloc.

7. Extracteur liquide-liquide selon la revendication 6, **caractérisé en ce que** les canaux (14, 15) s'étendent parallèlement à des faces latérales (2, 3) du bloc (1), où s'ouvrent les conduits de sortie, sur au moins la moitié d'une longueur du bloc, mesurée parallèlement aux faces latérales (2, 3), les conduits d'entrée et de sortie de la phase lourde débouchant du bloc (1) à des endroits alignés suivant une première ligne perpendiculaire aux faces latérales, et les conduits d'entrée et de sortie de la phase légère débouchant du bloc à des endroits alignés suivant une deuxième ligne perpendiculaire aux faces latérales.

8. Extracteur liquide-liquide selon la revendication 7, **caractérisé en ce que** les canaux (14, 15) ont chacun une largeur égale à au moins un tiers d'une largeur, mesurée perpendiculairement aux faces latérales (2, 3), de l'alvéole de décantation (9).

9. Extracteur liquide-liquide selon l'une quelconque des revendications précédentes, **caractérisé en ce qu'**il comprend une troisième surverse (38) entre l'alvéole de mélange (8) et l'alvéole de décantation (9), dotée d'un bord de débordement des phases liquides ayant une hauteur irrégulière en forme de ligne brisée délimitant une pluralité de reliefs.

10. Extracteur liquide-liquide selon l'une quelconque des revendications précédentes, **caractérisé en ce qu'**il comprend un équipement de décantation (42), enfichable dans l'alvéole de décantation par translation et comprenant une plaque de rabattement (43) plongeant dans l'alvéole de décantation (9) et continue jusqu'à une distance de garde avec un fond de l'alvéole de décantation.

11. Extracteur liquide-liquide selon la revendication 10, **caractérisé en ce que** l'équipement de décantation (42) comprend une grille de coalescence (44, 45), plongeant dans l'alvéole de décantation (9).

12. Extracteur liquide-liquide selon la revendication 11, **caractérisé en ce que** l'équipement comprend une deuxième grille de coalescence (45), les grilles de coalescence ayant des propriétés de mouillabilité opposées à l'égard d'une des phases liquides.

13. Extracteur liquide-liquide selon l'une quelconque des revendications 1 à 12, **caractérisé en ce que** le bloc comporte une console (49) sur une face supérieure de laquelle une pompe de recirculation (48) peut être posée, la pompe de recirculation étant dotée de tubes verticaux d'aspiration et de refoulement (50, 51) plongeant respectivement dans le conduit de sortie (12) d'une des phases liquides et dans un puits de recyclage (52), creusé dans le bloc (1) et communiquant à l'alvéole de mélange (8).

14. Batterie d'extraction liquide-liquide comprenant au moins un extracteur liquide-liquide selon l'une quelconque des revendications 1 à 13, **caractérisée en ce que** l'au moins un extracteur (60) et des modules d'extrémité (67, 68) sont alignés et serrés sur un support, les modules d'extrémité comprenant des connexions à des circuits des phases liquides à contre-courant dans la batterie, les entrées et les sorties de chacune des phases étant en prolongement entre les extracteurs.

15. Batterie d'extraction liquide-liquide selon la revendication 14, **caractérisée en ce qu'**elle comprend des plaques intercalaires (71) serrées contre les extracteurs et porteuses de joints d'étanchéité (74, 75) entourant les débouchés d'entrée et de sortie des phases liquides.

16. Batterie d'extraction liquide-liquide selon l'une quelconque des revendications 14 ou 15, **caractérisée en ce que** les extracteurs liquide-liquide, les modules d'extrémité, et éventuellement les plaques intercalaires sont imbriquées sur un rail constituant le support en pouvant coulisser le long du rail.

17. Batterie d'extraction liquide-liquide selon l'une quelconque des revendications 14 à 16, **caractérisée en ce que** le support contient une nappe chauffante.

18. Batterie d'extraction liquide-liquide selon l'une quelconque des revendications 14 à 16, **caractérisée en ce qu'**elle comprend un dispositif de circulation de fluide caloporteur traversant le bloc de l'au moins un extracteur liquide-liquide.

19. Batterie d'extraction liquide-liquide selon l'une quelconque des revendications 14 à 18, les extracteurs étant conformes à la revendication 7, **caractérisée en ce que** les extracteurs sont tous placés avec leurs constituants homologues alignés suivant des lignes parallèles au rail.

20. Batterie d'extraction liquide-liquide selon la revendication 19, **caractérisée en ce que** les extracteurs (60) sont transparents à au moins une portion (20) donnant sur les alvéoles de décantation (9).

## Patentansprüche

1. Flüssig-Flüssig-Extraktor (60), umfassend einen ausgehöhlten Block (1) mit einer Mischzelle (8) und einer Absetzzelle (9), die miteinander in Verbindung stehen, Einlasskanäle (10, 11) für zwei flüssige Phasen, die zur Mischzelle führen, und Auslasskanäle (12, 13) für die beiden flüssigen Phasen, die zur Absetzzelle führen, **dadurch gekennzeichnet, dass** die Auslasskanäle mit Überläufen (18, 24) neben der Absetzzelle (9) versehen sind und jeweils über eine Überlaufkante der flüssigen Phasen verfügen, die eine unregelmäßige Höhe in Form einer unterbrochenen Linie aufweist, die eine Vielzahl von Erhöhungen begrenzt.

2. Flüssig-Flüssig-Extraktor nach Anspruch 1, **dadurch gekennzeichnet, dass** die Überlaufkante (30) von mindestens einem der Überläufe (24) aus einer Vielzahl von Vertiefungen gebildet ist, die sich nach unten hin bis zu einer Breite von Null verjüngen und von zwei schrägen Kanten gebildet werden.

3. Flüssig-Flüssig-Extraktor nach Anspruch 1, **dadurch gekennzeichnet, dass** die Überlaufkante mindestens eines der Überläufe gezahnt ist und aus identischen und gleichmäßig verteilten Vertiefungen besteht.

4. Flüssig-Flüssig-Extraktor nach einem der Ansprüche 1 bis 3, **dadurch gekennzeichnet, dass** einer der Überläufe (18) an einer Verbindungsstelle zwischen der Absetzzelle und dem Auslasskanal einer der als leichte Phase bezeichneten flüssigen Phasen angeordnet ist.

5. Flüssig-Flüssig-Extraktor nach einem der Ansprüche 1 bis 4, **dadurch gekennzeichnet, dass** ein anderer der Überläufe (24) in einem Einlassschacht (16) des Auslasskanals (14) einer anderen der als schwere Phase bezeichneten flüssigen Phasen in einer einstellbaren Höhe im Einlassschacht angeordnet ist.

6. Flüssig-Flüssig-Extraktor nach einem der Ansprüche 1 bis 5, **dadurch gekennzeichnet, dass** die Auslasskanäle im Wesentlichen aus Kanälen (14, 15) bestehen, die zu einer oberen Fläche (1) des Blocks offen sind.

7. Flüssig-Flüssig-Extraktor nach Anspruch 61, **dadurch gekennzeichnet, dass** die Kanäle (14, 15) sich parallel zu den Seitenflächen (2, 3) des Blocks (1) erstrecken, wo sich die Auslasskanäle über mindestens die Hälfte einer Länge des Blocks, gemessen parallel zu den Seitenflächen (2, 3), öffnen, wobei die Einlass- und die Auslasskanäle der schweren Phase an Stellen aus dem Block (1) austreten, die entlang einer ersten Linie senkrecht zu den Seitenflächen ausgerichtet sind, und die Einlass- und die Auslasskanäle der leichten Phase an Stellen aus dem Block austreten, die entlang einer zweiten Linie senkrecht zu den Seitenflächen ausgerichtet sind.

8. Flüssig-Flüssig-Extraktor nach Anspruch 7, **dadurch gekennzeichnet, dass** die Kanäle (14, 15) jeweils eine Breite aufweisen, die mindestens einem Drittel der senkrecht zu den Seitenflächen (2, 3) gemessenen Breite der Absetzzelle (9) entspricht.

9. Flüssig-Flüssig-Extraktor nach einem der vorhergehenden Ansprüche, **dadurch gekennzeichnet, dass** er einen dritten Überlauf (38) zwischen der Mischzelle (8) und der Absetzzelle (9) umfasst, der über eine Überlaufkante der flüssigen Phasen verfügt, die eine unregelmäßige Höhe in Form einer unterbrochenen Linie aufweist, die eine Vielzahl von Erhöhungen begrenzt.

10. Flüssig-Flüssig-Extraktor nach einem der vorhergehenden Ansprüche, **dadurch gekennzeichnet, dass** er eine Absetzvorrichtung (42) umfasst, die durch Verschieben in die Absetzzelle eingesteckt werden kann, und eine Umklappplatte (43) umfasst, die in die Absetzzelle (9) eintaucht und bis zu einem Schutzabstand zum Boden der Absetzzelle durchläuft.

11. Flüssig-Flüssig-Extraktor nach Anspruch 10, **dadurch gekennzeichnet, dass** die Absetzvorrichtung (42) ein Koaleszenzgitter (44, 45) umfasst, das in die Absetzzelle (9) eintaucht.

12. Flüssig-Flüssig-Extraktor nach Anspruch 11, **dadurch gekennzeichnet, dass** die Vorrichtung ein zweites Koaleszenzgitter (45) umfasst, wobei die Koaleszenzgitter entgegengesetzte Benetzungseigenschaften bezüglich einer der flüssigen Phasen aufweisen.

13. Flüssig-Flüssig-Extraktor nach einem der Ansprüche 1 bis 12, **dadurch gekennzeichnet, dass** der Block eine Konsole (49) umfasst, auf deren Oberseite eine Umwälzpumpe (48) installiert werden kann, wobei die Umwälzpumpe mit vertikalen Ansaug- und Auslassrohren (50, 51) versehen ist, die jeweils in den Auslasskanal (12) einer der flüssigen Phasen und in einen Rückführungsschacht (52) eintauchen, der in den Block (1) eingelassen ist und mit der Mischzelle (8) in Verbindung steht.

14. Batterie zur Flüssig-Flüssig-Extraktion, die mindestens einen Flüssig-Flüssig-Extraktor nach einem der Ansprüche 1 bis 13 umfasst, **dadurch gekennzeichnet, dass** der mindestens eine Extraktor (60) und Endmodule (67, 68) auf einem Träger ausgerichtet und befestigt sind, wobei die Endmodule Verbindungen zu Kreisläufen der flüssigen Phasen im Gegenstrom in der Batterie umfassen, wobei die Einlässe und die Auslässe jeder der Phasen in Verlängerung zwischen den Extraktoren sind.

15. Batterie zur Flüssig-Flüssig-Extraktion nach Anspruch 14, **dadurch gekennzeichnet, dass** sie Trennplatten (71) umfasst, die gegen die Extraktoren gespannt sind und Abdichtungen (74, 75) tragen, die die Einlass- und die Auslassöffnungen der flüssigen Phasen umgeben.

16. Batterie zur Flüssig-Flüssig-Extraktion nach einem der Ansprüche 14 oder 15, **dadurch gekennzeichnet, dass** die Flüssig-Flüssig-Extraktoren, die Endmodule und gegebenenfalls die Trennplatten auf einer Schiene verschachtelt sind, die den Träger bilden, der entlang der Schiene gleiten kann.

17. Batterie zur Flüssig-Flüssig-Extraktion nach einem der Ansprüche 14 bis 16, **dadurch gekennzeichnet, dass** der Träger eine Heizschicht enthält.

18. Batterie zur Flüssig-Flüssig-Extraktion nach einem der Ansprüche 14 bis 16, **dadurch gekennzeichnet, dass** sie eine Kühlflüssigkeitszirkulationsvorrichtung umfasst, die durch den Block des mindestens einen Flüssig-Flüssig-Extraktors verläuft.

19. Batterie zur Flüssig-Flüssig-Extraktion nach einem der Ansprüche 14 bis 18, wobei die Extraktoren Anspruch 7 entsprechen, **dadurch gekennzeichnet, dass** die Extraktoren alle so angeordnet sind, dass ihre homologen Bestandteile entlang von parallel zu der Schiene verlaufenden Linien ausgerichtet sind.

20. Batterie zur Flüssig-Flüssig-Extraktion nach Anspruch 19, **dadurch gekennzeichnet, dass** die Extraktoren (60) zu mindestens einem Abschnitt (20) mit Blick auf die Absetzzellen (9) transparent sind.

## Claims

1. Liquid-liquid (60) extractor comprising a block (1) hollowed with mixing (8) and settling cells (9) in communication, inlet ducts (10, 11) of the two liquid phases leadingto the mixing cell and outlet ducts (12, 13) of the two liquid phases leading to the settling cell, **characterised in that** the outlet ducts are equipped with overflows (18, 24) adjacent to the settling cell (9), and each provided with an overflow edge of the liquid phases having an irregular height in the form of a broken line delimiting a plurality of reliefs.

2. Liquid-liquid extractor according to claim 1, **characterised in that** the overflow edge (30) of one at least of the overflows (24) consists of a plurality of indentations narrowing downwardly up to a zero width and formed by two oblique edges.

3. Liquid-liquid extractor according to claim 1, **characterised in that** the overflow edge of one at least of the overflows is serrated, consisting of identical and uniformly distributed reliefs.

4. Liquid-liquid extractor according to any one of claims 1 to 3, **characterised in that** one of the overflows (18) is placed at a junction between the settling cell and the outlet duct of one of said liquid phases known as light phase.

5. Liquid-liquid extractor according to any one of claims 1 to 4, **characterised in that** another of the overflows (24) is placed in an inlet well (16) of the outlet duct (14) of another of the liquid phases known as heavy phase, at an adjustable height in the inlet well.

6. Liquid-liquid extractor according to any one of claims 1 to 5, **characterised in that** the outlet ducts essentially consist of channels (14, 15) open at an upper face (1) of the block.

7. Liquid-liquid extractor according to claim 6, **characterised in that** the channels (14, 15) extend parallel to lateral faces (2, 3) of the block (1), where the outlet ducts open, over at least half of a length of the block, measured parallel to the lateral faces (2, 3), the inlet and outlet ducts of the heavy phase leading from the block (1) to locations aligned according to a first line perpendicular to the lateral faces, and the inlet and outlet ducts of the light phase leading from the block to locations aligned according to a second line perpendicular to the lateral faces.

8. Liquid-liquid extractor according to claim 7, **characterised in that** the channels (14, 15) each have a width equal to at least one third of a width, measured perpendicular to the lateral faces (2, 3), of the settling cell (9).

9. Liquid-liquid extractor according to any one of the preceding claims, **characterised in that** it comprises a third overflow (38) between the mixing cell (8) and the settling cell (9), provided with an overflow edge of the liquid phases having an irregular height in the form of a broken line delimiting a plurality of reliefs.

10. Liquid-liquid extractor according to any one of the preceding claims, **characterised in that** it comprises settling equipment (42) that can be plugged into the settling cell by translation and comprising a drawdown plate (43) plunging into the settling cell (9) and continues up to a guard distance with a bottom of the settling cell.

11. Liquid-liquid extractor according to claim 10, **characterised in that** the settling equipment (42) comprises a coalescence grid (44, 45), plunging into the settling cell (9).

12. Liquid-liquid extractor according to claim 11, **characterised in that** the equipment comprises a second coalescence grid (45), the coalescence grids having opposite wettability properties with regard to one of the liquid phases.

13. Liquid-liquid extractor according to any one of claims 1 to 12, **characterised in that** the block includes a console (49) on an upper face of which a recirculation pump (48) may be installed, the recirculation pump being provided with vertical suction and discharge tubes (50, 51) respectively plunging into the outlet duct (12) of one of the liquid phases and into a recycling well (52), hollowed into the block (1) and communicating with the mixing cell (8).

14. Liquid-liquid extraction battery comprising at least one liquid-liquid extractor according to any one of claims 1 to 13, **characterised in that** the at least one extractor (60) and end modules (67, 68) are aligned and tightened on a support, the end modules comprising connections to circuits of the countercurrent liquid phases in the battery, the inlets and the outlets of each of the phases being in extension between the extractors.

15. Liquid-liquid extraction battery according to claim 14, **characterised in that** it comprises dividing plates (71) tightened against the extractors and supporting seals (74, 75) surrounding the inlet and outlet openings of the liquid phases.

16. Liquid-liquid extraction battery according to any one of claims 14 or 15, **characterised in that** the liquid-liquid extractors, the end modules, and optionally the dividing plates are interlocked on a rail constituting the support by being able to slide along the rail.

17. Liquid-liquid extraction battery according to any one of claims 14 to 16, **characterised in that** the support contains a heater mat.

18. Liquid-liquid extraction battery according to any one of claims 14 to 16, **characterised in that** it comprises a device for circulating coolant passing through the block of the at least one liquid-liquid extractor.

19. Liquid-liquid extraction battery according to any one of claims 14 to 18, the extractors being in accordance with claim 7, **characterised in that** the extractors are all placed with their homologous constituents aligned according to lines parallel to the rail.

20. Liquid-liquid extraction battery according to claim 19, **characterised in that** the extractors (60) are transparent with at least one portion (20) giving on the settling cells (9).
